(19) **Europäisches Patentamt / European Patent Office / Office européen des brevets**

(11) **EP 2 161 938 B1**

(12) **EUROPEAN PATENT SPECIFICATION**

(45) Date of publication and mention
of the grant of the patent:
**31.10.2012 Bulletin 2012/44**

(51) Int Cl.:
*H04N 9/73* (2006.01)    *H04N 1/60* (2006.01)

(21) Application number: **09252121.0**

(22) Date of filing: **03.09.2009**

(54) **Imaging apparatus, imaging method and computer readable recording medium storing programs for executing the imaging method**

Bildgebungsvorrichtung, Bildgebungsverfahren und computerlesbares Aufzeichnungsmedium mit darauf gespeicherten Programmen zur Ausführung des Bildgebungsverfahrens

Appareil d'imagerie, procédé d'imagerie et programmes de stockage de support d'enregistrement lisibles sur un ordinateur pour exécuter le procédé d'imagerie

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.09.2008 JP 2008225679**

(43) Date of publication of application:
**10.03.2010 Bulletin 2010/10**

(73) Proprietor: **Ricoh Company, Ltd.**
**Tokyo 143-8555 (JP)**

(72) Inventor: **Nomura, Kenichiroh**
**Ohta-ku**
**Tokyo 143-8555 (JP)**

(74) Representative: **Leeming, John Gerard**
**J A Kemp**
**14 South Square**
**Gray's Inn**
**London WC1R 5JJ (GB)**

(56) References cited:
**JP-A- 2007 300 320**

• **CAO, FRÉDÉRIC, GUICHARD, FRÉDÉRIC, AND HORNUNG, HÉRVÉ: "Sensor spectral sensitivities, noise measurements and color sensitivity" PROCEEDINGS OF SPIE, THE INTERNATIONAL SOCIETY FOR OPTICAL ENGINEERING, vol. 6817, 28 January 2008 (2008-01-28), - 29 January 2008 (2008-01-29) XP040431498 ISSN: 0277-786X DOI: doi: 10.1117/12.766185 ISBN: 978-0-8194-6989-2**

EP 2 161 938 B1

**Description**

The present invention relates to an imaging apparatus, an imaging method and a computer readable recording medium storing program for executing the imaging method and which is in particular characterized by white balance control of the imaging apparatus.

In an imaging apparatus such as various types of cameras, a white section is extracted from photographed image components, a gain of each color component is controlled so that the ratio of R (red) component, G (green) component, and B (blue) component in the extracted white section becomes 1:1:1. It is well known that white balance correction is executed in such a manner that the thus extracted white section is recognized and recorded as a white color.

On one hand, if photographing is executed in a dark scene where the amount of light is scarce, an operation for bringing it close to a proper exposure is executed by controlling a shutter speed, a diaphragm openness and an ISO sensitivity.

In general, a combination of the delay of the shutter speed, the movement of the diaphragm toward an opening side, and the enhancement of the ISO sensitivity, or a combination of arbitrary devices among them is used for a high-sensitivity photographing.

However, noise appearing in a photographed image increases with the advancement of the sensitivity. For example, as the ISO sensitivity increases such as 400, 800, ..., more noise components are included in the photographed image. Particularly, in the white balance correction when the high sensitivity is set, if the sensitivity is high such as ISO=800, ISO=1600, since a great deal of noise is entered in each pixel, a proper white determination is not possible.

Thus, the technique has been proposed in which a proper white balance correction is executed when the high-sensitivity is set.

JP-2007-300320-A discloses a method comprising changing a size by which a photographed image is divided into a plurality of blocks in accordance with photographing conditions and determining whether each block is adapted to be white or not, and if the block is determined as being white, the integration over the pixel value is executed, calculating a white balance coefficient from the integrated value, thereby smoothing noise components occurring in the high-sensitivity photographing by executing white balance correction.

JP-2007-166088-A discloses an imaging apparatus in which the sampling-hold timing is adapted to be changed in order to optimize the audio-visual signal or variation due to the driving condition of the imaging section so that the amount of noise of the output signals becomes constant.

In the inventions described in any of the above-mentioned patent documents, depending upon the amount of noise components, it is not possible to include even the originally white sections in the white extraction range of the camera. Further, if the block size is enlarged, the chromatic color area included inside the block is also increased.

As a result, it is not possible to execute white extraction and thus it is also not possible to appropriately execute white balance correction.

In the future, as the technical progress further proceeds, the size of the image pickup device is reduced and the area per one pixel is reduced. Further, along with the more higher-sensitivity photographing, it is anticipated that the noise components included in the photographed image considerably increase.

Meanwhile, if the sampling-hold timing is changed in order to reduce the influences of the noise when the high-sensitivity is set, there arises problems such as the change of input data, for example, there is a problem in that the white balance correction method corresponding to the ratio of R component, G component and B component has not been invented.

The present invention is made in view of the foregoing prior art actual situation and thus it is an object of the present invention to provide an imaging apparatus capable of realizing good white balance correction in which a color shift is not generated in the whole screen, an imaging method and a computer readable medium storing programs for executing the imaging method.

According to an aspect of the present invention, there is provided an imaging apparatus and an imaging method as defined in the independent claims.

The white extraction range may be shifted at a constant rate in response to the adjusted analog gain by the analog gain adjusting device.

The sampling-hold timing may be comprised so that the amount of noise of the output signal is restrained within a constant range, wherein the white extraction range may be switched in response to the adjusted sampling-hold by the sampling-hold adjusting device.

FIG. 1 is a front view illustrating an external appearance of a digital camera as an example of an imaging apparatus according to the present invention.

FIG. 2 is a rear elevation view of the digital camera.

FIG. 3 is a top plan view of the digital camera.

FIG. 4 is a block diagram illustrating a system arrangement example of the digital camera.

FIG.5 is a flow chart illustrating an embodiment 1 of the imaging apparatus according to the present invention.

FIG. 6 is a graph illustrating the variation of the G/R versus the ISO sensitivity in the embodiment.

FIG. 7 is a graph illustrating the variation of the G/B versus the ISO sensitivity in the embodiment 1.

FIG. 8 is a graph illustrating a black body radiation curve on the two-dimensional color coordinate system with the G/R as x-axis and the G/B as y-axis, for setting a white extraction range in the embodiment 1 at the ISO = 100.

FIG. 9 is a graph illustrating a black body radiation curve, for setting a white extraction range in the embodiment 1 at the ISO = 400.

FIG. 10 is a flow chart illustrating an embodiment 2 of an imaging apparatus according to the present invention.

FIG. 11 is a graph illustrating the relationship between the AGC under a prescribed light source and the G/R.

FIG. 12 is a graph illustrating the relationship between the AGC under a prescribed light source and the G/B.

FIG. 13 is a graph illustrating a black body radiation curve on the two-dimensional color coordinate system in the embodiment 2, for setting a white extraction range at the ISO = 100.

FIG. 14 is a graph a graph illustrating a black body radiation curve on the two-dimensional color coordinate system in the embodiment 2, for setting a white extraction range at the ISO = 400.

FIG. 15 is a graph illustrating a black body radiation curve on the two-dimensional color coordinate system in the embodiment 2, for setting a white extraction range at the ISO = 1600.

Embodiments of an imaging apparatus, an imaging method, and a computer readable recording medium for executing the imaging method in accordance with the present invention will be described in further detail by way of example with reference to the accompanying drawings.

[Embodiment 1]

An external appearance structure of a digital camera or an example of an imaging apparatus in accordance with the present invention will be described with reference to the accompanying drawings.

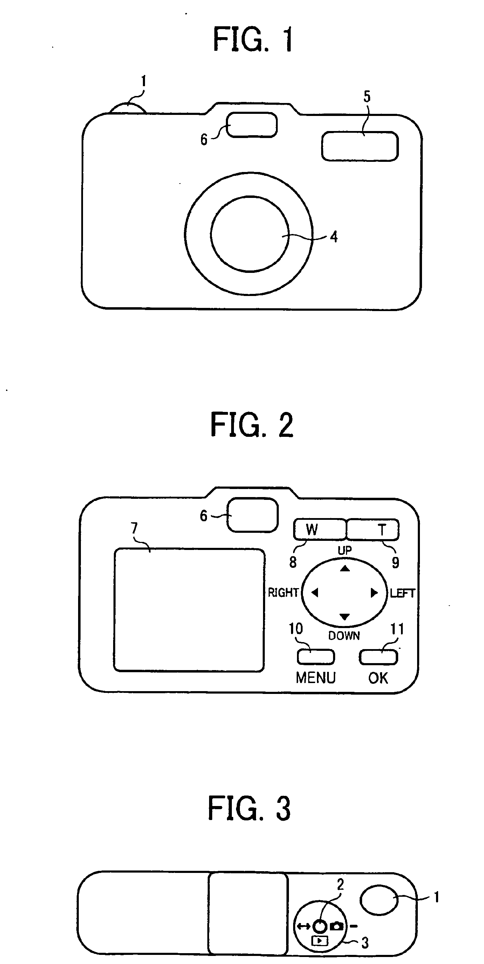

In FIGs.1 to 3, an upper surface side of a digital camera in an embodiment according to the present invention, as shown in FIG.1, is provided with a release button (a shutter button) 1, a power supply button 2, an imaging and reproducing switching dial 3.

The front side of the digital camera is provided with a lens-barrel unit 4 having an image picking-up lens system, a strobe light emitting section 5, and an optical finder 6.

The rear side of the digital camera is as shown in FIG.2 provided with a liquid crystal monitor (hereinafter, referred to "LCD"), an ocular section 9 of the optical finder 6, a wide angular side (W) zooming switch 8, a telephoto side (T) zooming switch 9, a menu button 10, and a defining button 11 or so.

Meanwhile, the side surface of the digital camera is provided with a memory card storing section where the memory card is stored into the inside of the digital camera.

The above-mentioned memory card is mainly adapted to store the photographed image data.

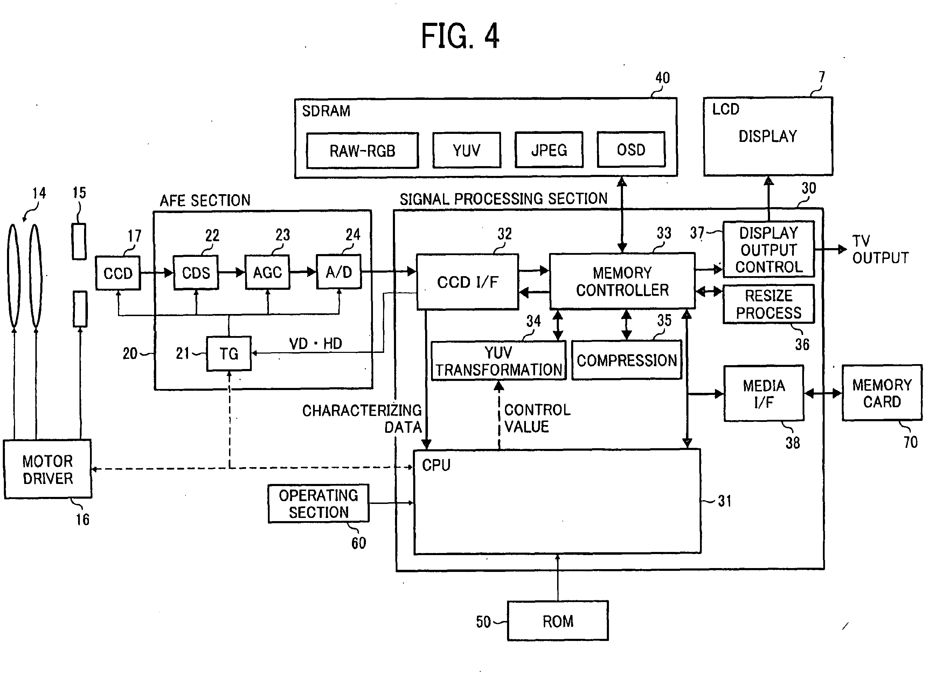

Next, the system arrangement example of the above-mentioned digital camera will be described based upon FIG.4.

Within this digital camera is mounted a solid-state image sensor or CCD 17 by which an object image which is incident through an image pickup lens system 14 positioned in the lens barrel unit 4 is imaged on a light-receiving surface.

The CCD 17 outputs analog RGB image signals which correspond to the object image by executing photoelectric conversion on every pixel as is generally known.

Electric signals output through the CCD 17 are converted to digital signals and entered into an analog front end section 20 (hereinafter, referred to "AFE section") which executes an operational process as described hereinafter.

Meanwhile, a signal processing section 30 where digital signals output from the AFE section 20, a SDRAM or SDRAMs 40 which temporarily store(s) the data, a ROM or ROMs 50 into which a control program and the like are stored, and a motor driver and so on are also provided.

The lens barrel unit 4 comprises an image pickup lens system 1 having a zooming lens or a focal lens or the like, and an aperture stop, and a mechanical shutter unit 15.

Each drive mechanism (not shown) of the image pickup lens system 14, the aperture stop unit, and the shutter unit 15 is driven by the motor driver 16. The motor driver 16 is driven-controlled by the control signals from the control section 31 comprising a CPU of the signal processing section 30. RGB primary color filters as resolving filters are disposed and electrical signals (analog RGB image signals) which correspond to the RGB three colors are output.

The AFE section 20 comprises, a timing signal generating section (hereinafter, referred to "TG") 21 which drives the CCD 17, a correlated double sampling section (hereinafter, referred to "CDS") 22 which samples electric signals (analog RGB image signals) output from the CCD 17, an analog gain control section (hereinafter, referred to "AGC") 23 where each gain of image signals sampled by the CDS 22 is adjusted, and an analog-digital converter (A/D) 24 where the image signals gain-adjusted by the AGC 23 are converted into digital signals (RAW-RGB data).

The above-mentioned "RAW-RGB data" means raw RGB data.

The signal processing section 30 comprises a CCD interface section 32 which outputs the picture horizontal synchronizing signal (HD) and the picture vertical synchronizing signal (VD) to a TG 21 of the AFE section 20, and takes in the RAW-RGB data output from the A/D 24 of the AFE section 20 in synchronism with these synchronizing signals, a memory controller 33 which controls the SDRAM 40, a YUV conversion section 34 which is capable of displaying the taken-in RGB data, or converts them into recordable YUV format image data, a resize processing section 36 where an image size is changed in accordance with the image data to be displayed or recorded, a display output control section 37 which controls the display and output of the image data, a data compression section 35 in order to record the image data in a recordable format, a media interface (hereinafter, referred to "media I/F") 38 where the image data is written into the memory card or the data written in the memory card is read out, a control section 31 which systematically controls the entire digital camera system based upon the control program stored in the ROM 50 by the operational input information from the operational section 60.

The operational section 60 includes the release button 1 provided on the external surface of the digital camera as shown in FIGs.1 to 3, the power supply button 2, the imaging and reproducing switching dial 3, the wide angular side zooming switch 8, the telephoto side zooming switch 9, the menu button 10, and the defining button 11 or so on.

By operating these operational buttons by the photographer, predetermined operational instruction signals are entered into the control section 31.

Into the SDRAM 40, the RAW-RGB data taken in the CCDI/F32 is stored, the YUV data (YUV format image data) converted in the YUV conversion section is also stored, and, further, the image data such as JPEG format data and the like is stored.

Small blocks depicted in a block showing the SDRAM 40 show "RAW-RGB", "YUV", and "JPEG" representing a memory storing the RAW-RGB data, the YUV data, and the JPEG format compression data, respectively.

Meanwhile, "YUV" of the YUV data means a format in which a certain color is represented upon the information by the luminance data (Y), the chromatic difference or the difference (U) between the luminance data and blue (B) component data, and the difference (V) between the luminance data and red (R) component data.

Next, a monitoring operation and a still image photographing operation of the digital camera that has been described hereto will be described below. In this digital camera, a still picture photographing is executed while a monitoring operation as described below is executed.

First of all, when the photographer turns on the power supply button 2 and sets the imaging and reproducing switching dial 3 to a photographing mode (still picture photographing mode), the digital camera is triggered in a recordable mode.

If the control section 31 detects that the power supply button 2 is turned on and the imaging and reproducing switching dial 3 is set to the photographing mode, The control section 31 outputs control signals to the motor driver 16 to move the lens barrel unit to a position where photographing is possible and triggers the CCD 17, the AFE section 20, the signal processing section 30, SDRAM 40, ROM 50, and liquid crystal monitor 7 and the like.

Further, the photographing lens system 14 of the lens barrel 4 is directed toward the object and thus the light beam from the object which is entered through the photographing lens system 14 is incident onto a light-receiving surface of each pixel of the CCD 17 and finally the object image is imaged on this light-receiving surface

The CCD 17 outputs electrical signals (analog RGB image signal) corresponding to the object image which has been image-formed. This output signal is input via the CDS 22 and the AGC 23 to the A/D 24, thereby being converted into 12 bit RAW-RGB data. This RAW-RGB data is taken in the CCDI/F 32 of the signal processing section 30 and is stored via the memory controller 33 in the SDRAM 40. The RAW-RGB data can be read out via the memory controller 33 from the SDRAM 40. The read-out RAW-RGB data is input to the YUV conversion section 34 and converted into YUV data (YUV signal). This YUV data is stored via the memory controller 33 in the SDRAM 40.

The YUV data can be read out via the memory controller 33 from the SDRAM 40, the read out YUV data is fed via the display output control section 37 to the liquid crystal display monitor (LCD), and the captured image (movie) is displayed.

When the picked-up image is displayed in the liquid crystal monitor (LCD) 7 for monitoring, one frame data is read out at a time interval of 1/30 second by executing thinning-out processing of the number of pixels with the CCD I/F 32.

Meanwhile, upon this monitoring operation, a photographed image (movie) is only displayed on the liquid crystal monitor (LCD) 7 which functions as an electric finder and the depressing operation (including half depressing) is not executed to the release button.

It is possible to confirm a compositional arrangement and the like for photographing a still image by displaying the photographed image on the liquid crystal monitor (LCD) 7.

Further, it is possible to output as a TV video signal from the display video output section 37 and thus display the photographed image (movie) on an external television set (TV) via a video cable

The CCD I/F 32 of the signal processor 31 calculates evaluated values of the automatic focus adjusting function (hereinafter, referred to "AF"), the automatic exposure adjusting function (hereinafter, referred to "AE"), and automatic white-balance adjusting function.

The AF evaluated value is calculated by the output integral value of the high frequency components extraction filter and the integrated value of the luminance data of adjacent pixels.

When the object image is in a focusing state, since the edge section thereof is clear, high frequency compositions are highest.

The AF evaluated value at each focal lens position in a photographing lens system is acquired by utilizing this when the AF is operated (focusing detection is operated).

The AF operation is executed by detecting a point where the evaluated value is highest, as a focusing point.

The AE evaluated value and the AWB evaluated value are calculated from the respective integral values of the RGB values in the RAW-RGB data.

For example, a screen corresponding to the light-receiving surface the whole pixels of the CCD 17 is divided into 256 areas (blocks) (for example, 16 divisions toward a horizontal direction and 16 divisions toward a vertical direction), and the RGB integration of the respective areas (blocks) is calculated.

And, the control section 31 reads out the calculated RGB integration values and in the AE operation process the luminance of the respective areas (blocks) of the screen is determined. The control section 31 further sets an exposure condition, that is to say, the number of electrical shutter times of the CCD 17 based upon the amount of exposure, a diaphragm value of the diaphragm aperture unit, and putting in and out of the ND filter and the like.

Further, by executing the AWB process operation, from the distribution of the RGB, the control value of the AWB is determined in accordance with a color of a light source of the object.

The white balance is adjusted with this AWB process operation when converting into the YUV data in the YUV conversion section 34.

Meanwhile, the AE process operation and the AWB process operation are continuously executed. The CCD I/F 32 comprises a function as defined in the recitation of "white balance evaluated value acquisition device" in the claims.

And, when the monitoring operation is performed, if the release button is depressed from the half depressed state to the totally depressed state, still picture shooting action is initiated.

In this shooting action, focusing position detection action or AF action and the still picture recording process are executed.

Namely, if the release button is depressed to a totally depressed state, a focal lens in the photographing lens system is moved by the drive instruction from the control section 31 to the motor driver 16, for example, a so-called mountain climbing AF or a contrast evaluation method is executed.

If the AF (focusing) target area is an entire area from infinity to a close range, a focal lens of the shooting lens system moves to each focus position, from the close range to infinity or from infinity to the close range, and the control section 31 reads out the evaluated value at each focus position which has already been calculated by the CCD I/F 32.

The focus lens is moved to the focusing position and then is focused by regarding a position where the AF evaluating value at each focus position has a maximum value as a focusing position.

If the AE process operation is executed and the exposure process is completed, a mechanical shutter unit is closed by the drive instruction from the control section 31 to the motor driver 16 and an analog image signal for the still picture is output from the CCD 17.

And, similar to the monitoring, the analog image signal is converted into the RAW-RGB data via A/D conversion section 24 of the AFE section 20. The RAW-RGB data is taken in the CCD I/F 32 of the signal processing section 30, converted into YUV data in the YUV conversion section 34, and stored into the SDRAM 40 via the memory controller 33.

The YUV data is read out from the SDRAM 40, converted into a size corresponding to the number of recording pixels in a resize process section 36, and compressed into image data such as JPEG format and the like in the data compressing section 35.

The compressed JPEG format and the like image data is written down onto the SDRAM 40 and thereafter read out via the memory controller 33 from the SDRAM 40, and stored via the media I/F 38 onto the memory card 70

The above-mentioned hardware structure according to the present invention is not changed from that of the prior art camera. The main feature of the present invention lies in the white balance correction using the above-mentioned hardware and thus the control operation thereof will be explained in every example below.

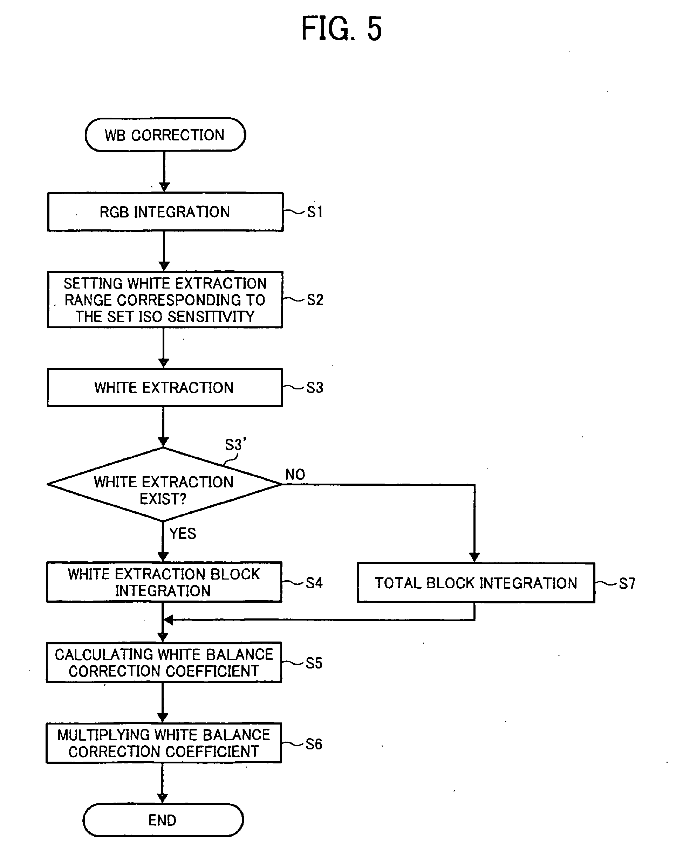

FIG.5 shows a series of white balance (hereinafter, referred to "WB") correction of a first embodiment according to the present invention. Operational steps are represented as S1, S2, S3, ....

Firstly, photographing image data prior to signal processing is stored into the SDRAM 40 as the RAW-RGB data. This stored data is read out from the SDRAM 40 and input to the CCD-I/F 32. In the RGB integration circuit within the CCD-I/F 32, based upon the integration range and the number of block divisions over a predetermined screen, R signal, G signal, and B signal are integrated per a block unit which is divided into a grid over the entire screen, respectively, and output into a register which is readable out from the SDRAM 40 or the CPU 31 (S1).

Next, a white extraction range is set (S2).

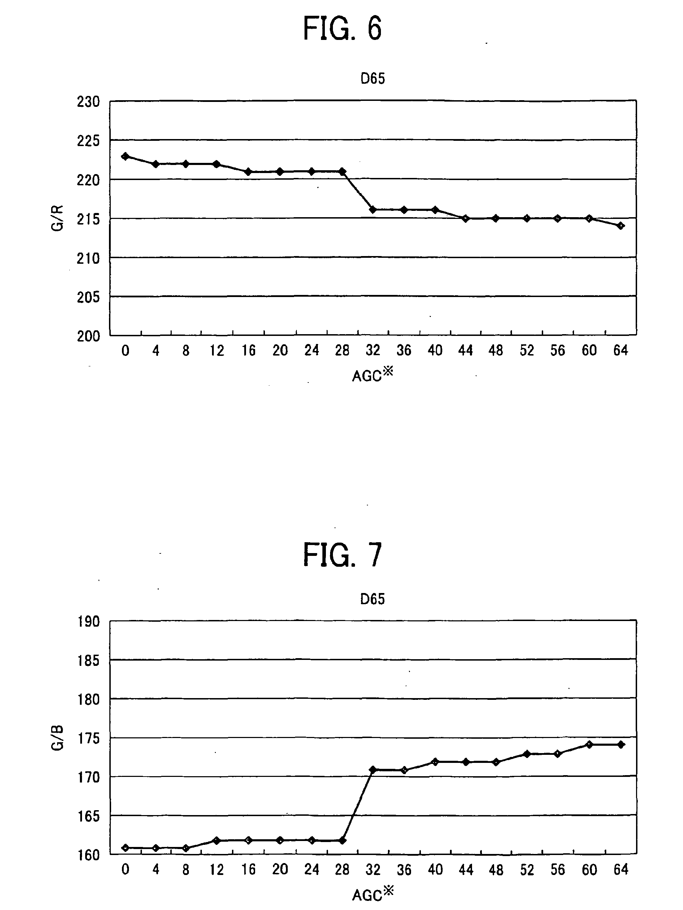

This white extraction setting step is performed by previously preparing sensitivities corresponding to the ISO sensitivity in a camera and setting a sensitivity value corresponding to an ISO sensitivity which is set when photographing. The sensitivity value which is set in the AGC 23 of the AFE section 20 is changed. The relationship between the ISO sensitivity and the control value set in the AGC 23 is shown in FIGs.6 and 7.

FIGs.6 and 7 show one mere example but is not limited thereto.

FIG.6 shows a relationship between the AGC and the G/R in a state that a white paper is photographed under a standard light source for measuring a color of the object or a light source of D65.

FIG.7. shows a relationship between the AGC and the G/B when photographing a white paper under the light source of D65.

The AGC control values 0, 16, 32, 48, and 64 shown in FIGs.6 and 7 correspond to the ISO sensitivity 100, 200, 400, 800, and 1600, respectively.

Meanwhile, the relationship between the AGC control values and the ISO sensitivities is a mere example but the present invention is not limited thereto.

Next, white is extracted (S3).

The RGB integral value acquired per a block unit is converted into G/R, G/B, and if the converted value is within a range of white extraction, the corresponding block is stored as a white extraction block.

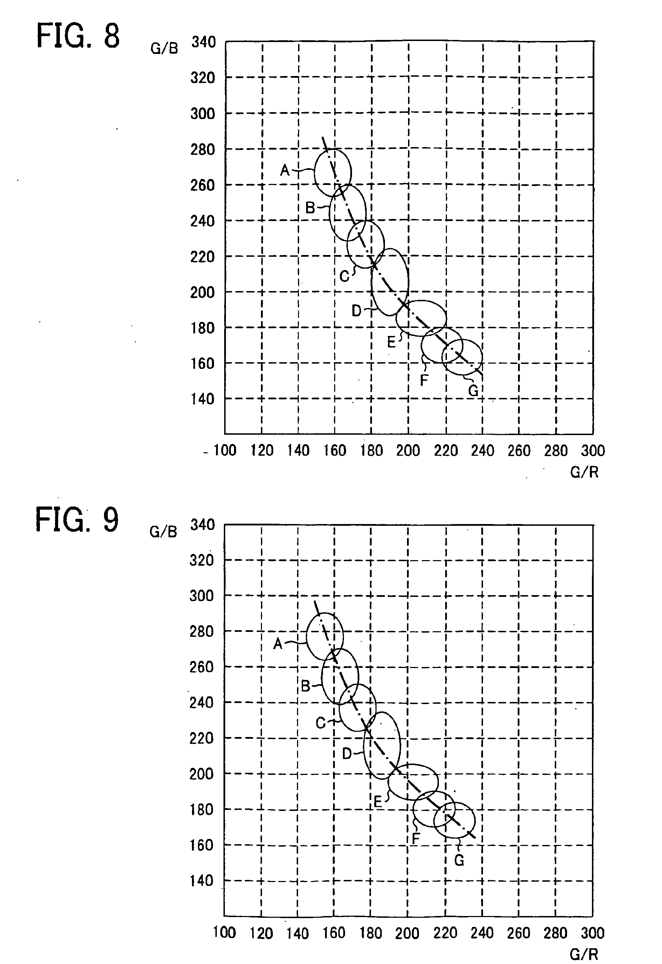

The white extraction range is defined by a plurality of elliptic or rectangular frames along a black radiation curve as shown in a dash-and-dot line on a color coordinate in which G/R is made as an X axis and G/B is made as a Y axis as shown in FIGs.8 and 9.

FIG.8 shows a white extraction range in case of ISO=100.

FIG.9 shows a white extraction range in case of ISO=400.

The elliptic frames of A, B, C, D, E, F, and G in FIGs.8 and 9 correspond to light sources of an incandescent lamp, the evening sun, a hot white color fluorescent lamp, a white color fluorescent lamp, a bright sky, a cloudy sky, and the shade, respectively.

Each elliptic frame as shown in FIGs.8 and 9 corresponds to the white extraction range as mentioned above, an outdoor bright sky, cloudy sky, and shade, which ranges approximately from 5200K to 8000K, and the evening sky, an incandescent lamp, a hot white color fluorescent lamp, and a white color fluorescent lamp, which ranges approximately from 3000K to 4200K.

Concerning the sensitivities except for the sensitivities of ISO100 and IS0400, the graphs showing the white extraction range as shown in FIGs.8 and 9 will be prepared.

If the number of white extraction blocks extracted in the white extraction range is more than a certain standard number, the G/R and G/B of each white extraction block are weighed with the average luminance of the block in question, thereafter integrated and G/R, G/B per one pixel are calculated (S4).

The average luminance is calculated from the RGB integration value of the block in question by the following equation.

$$\text{The luminance} = R \times 0.299 + G \times 0.587 + B \times 0.114$$

From the calculated G/R and G/B per one pixel, correction is executed for every area on the color coordinate of the G/R and G/B and thus corrected G/R and G/B are made to correcting coefficients (S5).

The phrase "Correction is executed for every area" means that the G/R value is adapted to be larger and the G/B value is adapted to be smaller such that a color of the light source remains, for example, in a scene of low color temperature side in which the G/R value is small and the G/B value is large, or if the G/R value is more than a prescribed amount in another scene of high color temperature in which the G/R value is large and the G/B value is small, then a limit process is executed.

The R data and B data on the full screen are multiplied by WB correction coefficients of Rgain and Bgain, respectively (S6).

The CCD I/F 32 has a function as a correction coefficient calculating device in which a correction coefficient for white balance is calculated from the white extraction result.

The control section 31 functions as the white extraction device and also as the analog gain adjusting device.

If the white extraction was not executed in the white extraction process, the G/R and G/B integration values in all of the blocks are integrated and the G/R and G/B per one pixel are calculated (S7), and based upon these calculated values, the WB correction coefficients in the step S5 are calculated.

As described above, in a first embodiment, the analog gain which is adjusted depending upon the luminance of the object, that is to say, a plurality of white extraction ranges in response to the ISO sensitivities are set as tables and thus photographing is adapted to be executed by switching the white extraction ranges selected in response to the ISO sensitivities when photographing or selecting one of the tables mentioned above.

With this arrangement, in the case that the ISO sensitivity is high, even if the ratio of R composition, G composition, and B composition is changed due to the noise effects, it is possible to perform a stable white extraction in ordinary circumstances.

In the case that the ISO sensitivities are different between when monitoring and when photographing still images, it is possible to perform a stable white extraction and acquire an image of the same color shade (coloring) when monitoring and when photographing still images, respectively.

[Embodiment 2]

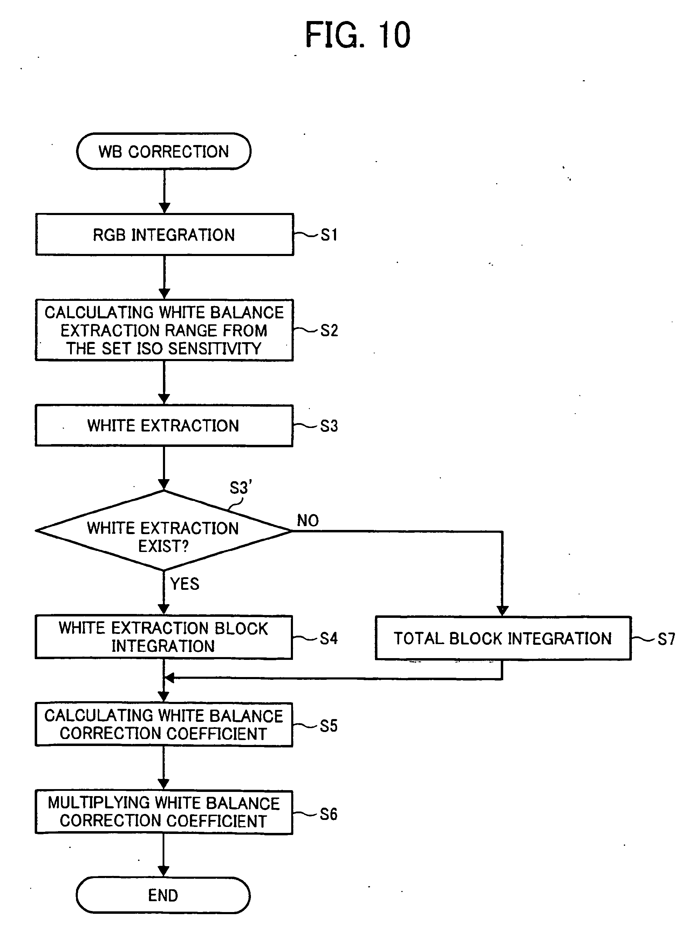

FIG.10 shows a series of WB correction processes according to a second embodiment of the present invention. This embodiment is different from the first embodiment with respect to a setting method (S2) of the white extraction range. The other features are similar to those of the first embodiment.

The setting method (S2) of this embodiment is such that the G/R and G/B of each white extraction frame is uniformly changed in response to the ISO sensitivities.

The changes of the ISO sensitivities change the values which are set in the AGC 23 of the AFE section 20.

The relationship between the ISO sensitivities and the AGC 23 can be set to the same as the relationship described in the first embodiment. For example, it is possible to correspond the ISO sensitivities of 100, 200, 400, 800, and 1600 to the AGC control values of 0, 16, 32, 48, and 64, respectively.

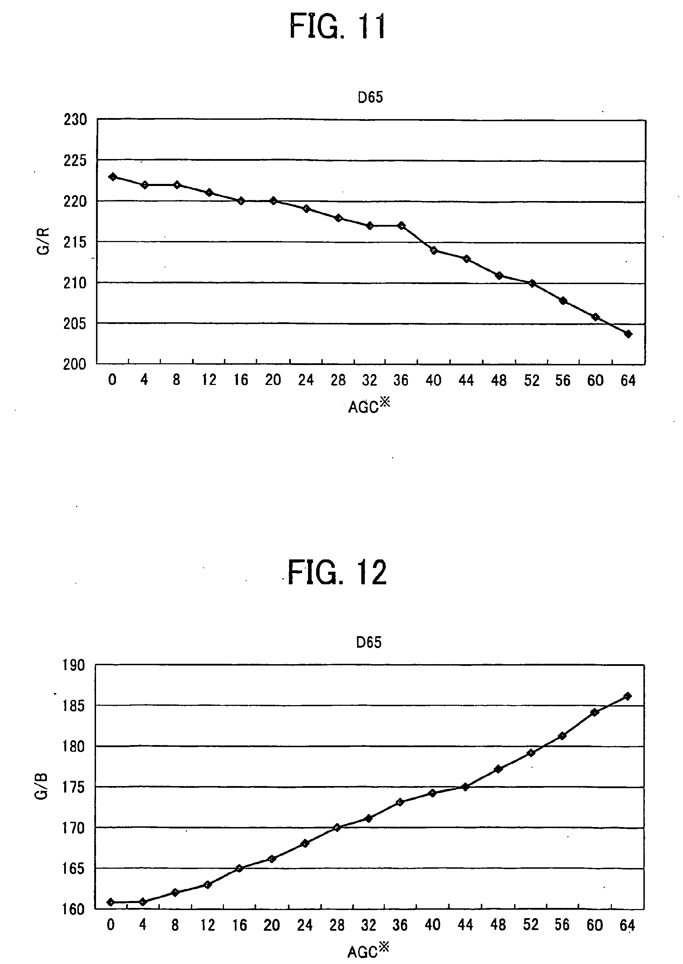

FIG.11 shows a relationship between the AGC and the G/R in a state that a white paper is photographed under a standard light source for measuring a color of the object or a light source of D65.

FIG. 12 shows a relationship between the AGC and the G/B when photographing a white paper under the light source of D65.

As can be seen from FIGs.11 and 12, when a white paper is photographed under the light source of D65, it is understandable that the higher the ISO sensitivities become, the lower the G/R becomes and the higher the G/B becomes.

According to FIGs.11 and 12, since the G/R and G/B are changed with a substantially constant rate, the G/R (AGCminR) and G/B (AGCminB) at a minimum AGC (AGCmin), and the G/R (AGCmaxR) and G/B (AGCmaxB) at a maximum AGC (AGCmax) are retained,and the amount of shift corresponding to the middle AGC is calculated by a linear interpolation.

For example, the shift amounts (ShiftR, ShiftB) in arbitrary AGC (AGCx) are calculated from the following formulas.

$$\mathrm{ShiftR} =$$

$$(\mathrm{AGCminR}+\mathrm{AGCx}\times((\mathrm{AGCmaxR}\text{-}\mathrm{AGCminR})/(\mathrm{AGCmax}\text{-}\mathrm{AGCmin})))/\mathrm{AGCminR}$$

$$\mathrm{ShiftB}=(\mathrm{AGCminB}+\mathrm{AGCx}\times((\mathrm{AGCmaxB}\text{-}\mathrm{AGCminB})/(\mathrm{AGCmax}\text{-}\mathrm{AGCmin})))/\mathrm{AGCminB}.$$

In the case that there exists flexion points of the G/R and G/B when changing the ISO (AGC), the amount of shift corresponding to the middle ISO (AGC) is calculated by a linear interpolation.

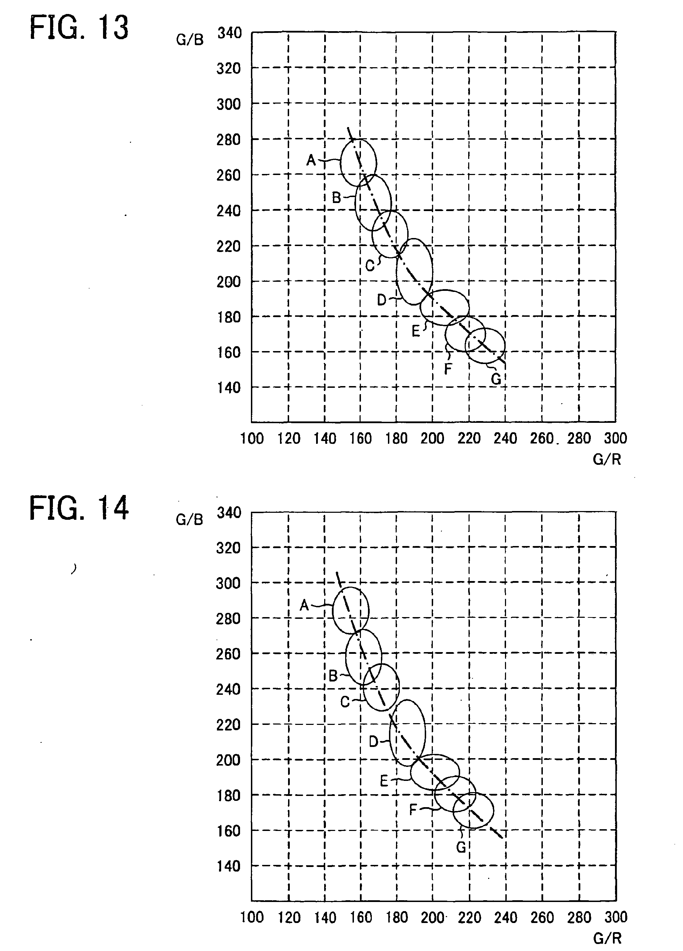

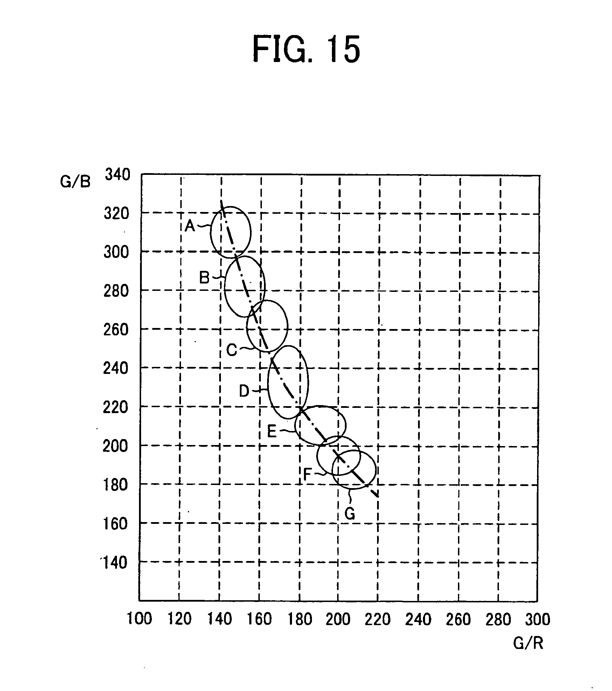

FIGs.13 to 15 show the white extraction range in the Embodiment 2 with respect to the ISO sensitivity 100, 400, and 1600, in accordance with FIGs.8 and 9.

Since the setting method of this embodiment 2 is such that the G/R and G/B of each white extraction frame is uniformly changed in response to the ISO sensitivities, in the order of FIGs.13, 14, and 15, graphs of the white extraction range showing in a dash-and-dot line shift naturally along its curve.

The above-mentioned embodiment 2 includes an analog gain adjusting device in which the analog gain is adjusted in accordance with the luminance of the object, wherein the white extraction range is shifted at a constant rate in response to the adjusted analog gain.

With this arrangement, in the case that the ISO sensitivity is high, even if the ratio of R composition, G composition, and B composition is changed due to the noise effects, it is possible to perform a stable white extraction in ordinary circumstances.

In the case that the ISO sensitivities are different between when monitoring and when photographing still images, it is possible to perform a stable white extraction and acquire an image of the same color shade (coloring) when monitoring and when photographing still images, respectively.

Effects of Invention

If the ISO sensitivity is high, even if the ratio of R composition, G composition, and B composition is changed due to the noise effects, it is possible to perform a stable white extraction in ordinary circumstances.

Thereby, in the case that the ISO sensitivities are different between when monitoring and when photographing still images, it is possible to perform a stable white extraction and acquire an image of the same color shade (coloring) when monitoring and when photographing still images, respectively.

As described above, although the present invention has been explained as being an image pickup device, the present invention can be regarded as the invention of an imaging pickup method in which each process is carried out. Further, the present invention can be regarded as the invention of a computer readable recording medium in which programs in order to execute the above-mentioned each process are recorded.

The image pickup device according to the present invention is applicable to various equipment such as a digital still camera, a video camera, and the like, for example, a camera incorporated into a portable information terminal and the like.

Although the present invention has been described in terms of exemplary embodiments, it is not limited thereto. It should be appreciated that variations may be made in the embodiments described by persons skilled in the art without departing from the scope of the present invention as defined by the following claims.

**Claims**

1. An imaging apparatus comprising:

    an image pickup device (17) for converting light input from an optical system into an electric signal and outputting as an image pickup signal;
    a white-balance evaluation value acquiring device (32) for extracting an evaluation value for white-balance from the image pickup signal;
    a white extraction device (31) for acquiring an extraction result by executing a white extraction based upon an evaluation value acquired by the white-balance evaluation value acquiring device and a previously set white extraction range;
    a correction coefficient calculating device (30, 31) for calculating a correction coefficient for white-balance from the extraction result acquired by the white extraction device; and
    an analog gain adjust device (23, 31) for adjusting an analog gain depending upon a luminance of an object, **characterised in that** a plurality of white extraction ranges corresponding to the analog gain are controlled in response to the analog gain adjusted by the analog gain adjust device.

2. The imaging apparatus as claimed in claim 1, wherein the white extraction ranges are set and switched in response to the analog gain adjusted by the analog gain adjust device when photographing.

3. The imaging apparatus as claimed in claim 1, wherein the white extraction ranges are set and shifted in response to the analog gain adjusted by the analog gain adjust device when photographing.

4. An imaging method which comprising:

    white-balance evaluation value acquisition process of extracting (S1) an evaluation value for white-balance from an image pickup signal output from an image pickup device (17);
    white extraction process of acquiring (S3) a white extraction result by executing the white extraction based upon an evaluation value acquired by the white-balance evaluation acquisition process and a previously set white extraction range;
    correction coefficient calculating process of calculating (S5) a correction coefficient for white-balance from the white extraction result acquired by the white extraction process; and
    an analog gain adjust process of adjusting an analog gain depending upon a luminance of an object; **characterised in that** the imaging method further comprises:

        setting (S2) a plurality of white extraction ranges corresponding to the analog gain and controlling the white extraction range in response to the analog gain adjusted by the analog gain adjust process when photographing.

5. The imaging method as claimed in claim 4, wherein the white extraction ranges are set and switched in response to the analog gain adjusted by the analog gain adjust process when photographing.

6. The imaging method as claimed in claim 4, wherein the white extraction ranges are set and shifted in response to the analog gain adjusted by the analog gain adjust process when photographing.

7.  A computer readable recording medium for storing programs, which when executed on a computer comprising a device having an image processing function, causes the computer to perform the imaging method as claimed in any of claim 4 to 6.

8.  A digital camera comprising the imaging apparatus as claimed in any one of claims 1 to 3.

9.  A video camera comprising the imaging apparatus as claimed in any one of claims 1 to 3.

10. A mobile phone comprising the imaging apparatus as claimed in any one of claims 1 to 3.

**Patentansprüche**

1.  Bildgebende Vorrichtung, die umfasst:

    eine Bildaufnahmevorrichtung (17), um einen Lichteingang von einem optischen System in ein elektrisches Signal umzusetzen und als ein Bildaufnahmesignal auszugeben;
    eine Weißabgleichsbewertungswert-Gewinnungsvorrichtung (32), um einen Bewertungswert für den Weißabgleich aus dem Bildaufnahmesignal zu extrahieren;
    eine Weißextraktionsvorrichtung (31), um durch Ausführen einer Weißextraktion anhand eines durch die Weißabgleichsbewertungswert-Gewinnungsvorrichtung gewonnenen Bewertungswerts und eines vorher festgelegten Weißextraktionsbereichs ein Extraktionsergebnis zu gewinnen;
    eine Korrekturkoeffizient-Berechnungsvorrichtung (30, 31), um aus dem durch die Weißextraktionsvorrichtung ermittelten Extraktionsergebnisses einen Korrekturkoeffizienten für den Weißabgleich zu berechnen; und
    eine Analogverstärkungs-Einstellvorrichtung (23, 31), um eine analoge Verstärkung in Abhängigkeit von einer Helligkeit eines Objekts einzustellen,
    **dadurch gekennzeichnet, dass** als Reaktion auf die analoge Verstärkung, die durch die Analogverstärkungs-Einstellvorrichtung eingestellt wird, mehrere Weißextraktionsbereiche, die der analogen Verstärkung entsprechen, gesteuert werden.

2.  Bildgebende Vorrichtung nach Anspruch 1, wobei die Weißextraktionsbereiche als Reaktion auf die analoge Verstärkung, die durch die Analogverstärkungs-Einstellvorrichtung eingestellt wird, beim Photographieren festgelegt und umgeschaltet werden.

3.  Bildgebende Vorrichtung nach Anspruch 1, wobei die Weißextraktionsbereiche als Reaktion auf die analoge Verstärkung, die durch die Analogverstärkungs-Einstellvorrichtung eingestellt werden, beim Photographieren festgelegt und verschoben werden.

4.  Bildgebendes Verfahren, das umfasst:

    einen Weißabgleichsbewertungswert-Gewinnungsprozess, um einen Bewertungswert für den Weißabgleich aus einem Bildaufnahmesignal, das von einer Bildaufnahmevorrichtung (17) ausgegeben wird, zu extrahieren (S1);
    einen Weißextraktionsprozess, um durch Ausführen einer Weißextraktion auf der Grundlage eines durch den Weißabgleichsbewertungswert-Gewinnungsprozess und eines früher festgelegten Weißextraktionsbereichs gewonnenen Bewertungswerts ein Weißextraktionsergebnis zu ermitteln (S3);
    einen Korrekturkoeffizient-Berechnungsprozess, um einen Korrekturkoeffizienten für den Weißabgleich aus dem durch den Weißextraktionsprozess gewonnenen Weißextraktionsergebnis zu berechnen (S5); und
    einen Analogverstärkungs-Einstellprozess, um in Abhängigkeit von einer Helligkeit eines Objekts eine analoge Verstärkung einzustellen;
    **dadurch gekennzeichnet, dass** das bildgebende Verfahren ferner umfasst:

    Einstellen (S2) mehrerer Weißextraktionsbereiche, die der analogen Verstärkung entsprechen, und Steuern des Weißextraktionsbereichs als Reaktion auf die analoge Verstärkung, die durch den Analogverstärkungs-Einstellprozess eingestellt wird, beim Photographieren.

5.  Bildgebendes Verfahren nach Anspruch 4, wobei die Weißextraktionsbereiche als Reaktion auf die analoge Verstärkung, die durch den Analogverstärkungs-Einstellprozess eingestellt wird, beim Photographieren festgelegt und

umgeschaltet werden.

**6.** Bildgebendes Verfahren nach Anspruch 4, wobei die Weißextraktionsbereiche als Reaktion auf die analoge Verstärkung, die durch den Analogverstärkungs-Einstellprozess eingestellt wird,beim Photographierenfestgelegt und verschoben werden.

**7.** Computerlesbares Aufzeichnungsmedium, um Programme zu speichern, die dann, wenn sie in einem Computer, der eine Vorrichtung mit einer Bildverarbeitungsfunktion umfasst, ausgeführt werden, den Computer veranlassen, das bildgebende Verfahren nach einem der Ansprüche 4 bis 6 auszuführen.

**8.** Digitalkamera, die die bildgebende Vorrichtung nach einem der Ansprüche 1 bis 3 umfasst.

**9.** Videokamera, die die bildgebende Vorrichtung nach einem der Ansprüche 1 bis 3 umfasst.

**10.** Mobiltelephon, das die bildgebende Vorrichtung nach einem der Ansprüche 1 bis 3 umfasst.

**Revendications**

**1.** Appareil de formation d'image comprenant :

un dispositif de prise d'image (17) pour convertir une lumière délivrée par un système optique en un signal électrique et le délivrer en tant que signal de prise d'image ;
un dispositif d'acquisition de valeur d'évaluation d'équilibre des blancs (32) pour extraire une valeur d'évaluation pour un équilibre des blancs du signal de prise d'image ;
un dispositif d'extraction des blancs (31) pour acquérir un résultat d'extraction en exécutant une extraction des blancs sur la base d'une valeur d'évaluation acquise par le dispositif d'acquisition de valeur d'évaluation d'équilibre des blancs et d'une plage d'extraction des blancs fixée au préalable ;
un dispositif de calcul de coefficient de correction (30, 31) pour calculer un coefficient de correction pour un équilibre des blancs à partir du résultat d'extraction acquis par le dispositif d'extraction des blancs ; et
un dispositif d'ajustement de gain analogique (23, 31) pour ajuster un gain analogique en fonction d'une luminance d'un objet,
**caractérisé en ce qu'**une pluralité de plages d'extraction des blancs correspondant au gain analogique sont commandées en réponse au gain analogique ajusté par le dispositif d'ajustement de gain analogique.

**2.** Appareil de formation d'image selon la revendication 1, dans lequel les plages d'extraction des blancs sont fixées et commutées en réponse au gain analogique ajusté par le dispositif d'ajustement de gain analogique lors d'une photographie.

**3.** Appareil de formation d'image selon la revendication 1, dans lequel les plages d'extraction des blancs sont fixées et décalées en réponse au gain analogique ajusté par le dispositif d'ajustement de gain analogique lors d'une photographie.

**4.** Procédé de formation d'image qui comprend :

un processus d'acquisition de valeur d'évaluation d'équilibre des blancs pour extraire (S1) une valeur d'évaluation pour un équilibre des blancs d'un signal de prise d'image délivré par un dispositif de prise d'image (17) ;
un processus d'extraction des blancs pour acquérir (S3) un résultat d'extraction des blancs en exécutant l'extraction des blancs sur la base d'une valeur d'évaluation acquise par le processus d'acquisition d'évaluation d'équilibre des blancs et d'une plage d'extraction des blancs fixée au préalable ;
un processus de calcul de coefficient de correction pour calculer (S5) un coefficient de correction pour un équilibre des blancs à partir du résultat d'extraction des blancs acquis par le processus d'extraction des blancs ; et
un processus d'ajustement de gain analogique pour ajuster un gain analogique en fonction d'une luminance d'un objet ;
**caractérisé en ce que** le procédé de formation d'image consiste en outre à :

fixer (S2) une pluralité de plages d'extraction des blancs correspondant au gain analogique et commander la plage d'extraction des blancs en réponse au gain analogique ajusté par le processus d'ajustement de gain analogique lors de la photographie.

5. Procédé de formation d'image selon la revendication 4, dans lequel les plages d'extraction des blancs sont fixées et commutées en réponse au gain analogique ajusté par le processus d'ajustement de gain analogique lors de la photographie.

6. Procédé de formation d'image selon la revendication 4, dans lequel les plages d'extraction des blancs sont fixées et décalées en réponse au gain analogique ajusté par le processus d'ajustement de gain analogique lors de la photographie.

7. Support d'enregistrement pouvant être lu par un ordinateur pour mémoriser des programmes qui, lorsqu'ils sont exécutés sur un ordinateur comprenant un dispositif comportant une fonction de traitement d'image, amènent l'ordinateur à effectuer le procédé de formation d'image selon l'une quelconque des revendications 4 à 6.

8. Appareil photographique numérique comprenant l'appareil de formation d'image selon l'une quelconque des revendications 1 à 3.

9. Caméra vidéo comprenant l'appareil de formation d'image selon l'une quelconque des revendications 1 à 3.

10. Téléphone mobile comprenant l'appareil de formation d'image selon l'une quelconque des revendications 1 à 3.

## FIG. 1

## FIG. 2

## FIG. 3

# FIG. 4

EP 2 161 938 B1

# FIG. 5

```
        ┌─────────────────────┐
        │    WB CORRECTION     │
        └─────────────────────┘
                  │
                  ▼
     ┌───────────────────────────┐
     │     RGB INTEGRATION       │──S1
     └───────────────────────────┘
                  │
                  ▼
     ┌───────────────────────────┐
     │  SETTING WHITE EXTRACTION │
     │  RANGE CORRESPONDING TO   │──S2
     │  THE SET ISO SENSITIVITY  │
     └───────────────────────────┘
                  │
                  ▼
     ┌───────────────────────────┐
     │      WHITE EXTRACTION     │──S3
     └───────────────────────────┘
                  │
                  ▼            S3'
              ◇─────────────◇        NO
             ◇  WHITE EXTRACTION ◇──────────────────┐
              ◇     EXIST?     ◇                     │
                 ◇─────────◇                          │
                  │ YES                               ▼
                  ▼                         ┌──────────────────────────┐
     ┌───────────────────────────┐          │  TOTAL BLOCK INTEGRATION │──S7
     │   WHITE EXTRACTION BLOCK  │──S4       └──────────────────────────┘
     │       INTEGRATION         │                     │
     └───────────────────────────┘◄────────────────────┘
                  │
                  ▼
     ┌───────────────────────────┐
     │  CALCULATING WHITE BALANCE│──S5
     │   CORRECTION COEFFICIENT  │
     └───────────────────────────┘
                  │
                  ▼
     ┌───────────────────────────┐
     │ MULTIPLYING WHITE BALANCE │──S6
     │   CORRECTION COEFFICIENT  │
     └───────────────────────────┘
                  │
                  ▼
        ┌─────────────────────┐
        │        END          │
        └─────────────────────┘
```

14

EP 2 161 938 B1

# FIG. 6

D65

# FIG. 7

D65

15

FIG. 8

FIG. 9

# FIG. 10

```
        ┌─────────────────────┐
        │   WB CORRECTION     │
        └──────────┬──────────┘
                   │
                   ▼
        ┌─────────────────────┐
        │  RGB INTEGRATION    │──S1
        └──────────┬──────────┘
                   │
                   ▼
        ┌─────────────────────┐
        │ CALCULATING WHITE   │
        │ BALANCE EXTRACTION  │──S2
        │ RANGE FROM THE SET  │
        │   ISO SENSITIVITY   │
        └──────────┬──────────┘
                   │
                   ▼
        ┌─────────────────────┐
        │  WHITE EXTRACTION   │──S3
        └──────────┬──────────┘
                   │
                   ▼            S3'
              ╱─────────╲
             ╱  WHITE    ╲   NO
            ╱  EXTRACTION ╲──────────┐
            ╲   EXIST?    ╱          │
             ╲─────┬─────╱           │
                   │ YES             ▼
                   ▼          ┌──────────────────┐
        ┌─────────────────┐   │  TOTAL BLOCK     │──S7
        │ WHITE EXTRACTION│   │  INTEGRATION     │
        │ BLOCK           │──S4└────────┬─────────┘
        │ INTEGRATION     │            │
        └────────┬────────┘            │
                 │◄────────────────────┘
                 ▼
        ┌─────────────────────┐
        │ CALCULATING WHITE   │
        │ BALANCE CORRECTION  │──S5
        │    COEFFICIENT      │
        └──────────┬──────────┘
                   │
                   ▼
        ┌─────────────────────┐
        │ MULTIPLYING WHITE   │
        │ BALANCE CORRECTION  │──S6
        │    COEFFICIENT      │
        └──────────┬──────────┘
                   │
                   ▼
        ┌─────────────────────┐
        │        END          │
        └─────────────────────┘
```

# FIG. 11

D65

# FIG. 12

D65

FIG. 13

FIG. 14

# FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007300320 A
- JP 2007166088 A